# EUROPEAN PATENT APPLICATION

(11) **EP 4 550 531 A1**
(43) Date of publication of application: **07.05.2025**
(21) Application number: 23912438.1
(22) Date of filing: 25.08.2023
(51) Int. Cl.: H01M 10/658, H01M 10/42, H01M 50/204, H01M 50/249, A62D 1/00, A62C 3/16, A62C 35/10

(54) **BATTERY ASSEMBLY, AND BATTERY PACK AND VEHICLE INCLUDING SAME**

(30) Priority: 28.12.2022 KR 20220187200; 31.03.2023 KR 20230043174
(71) Applicant: LG Energy Solution, Ltd., Seoul 07335 (KR)
(72) Inventor: JANG, Sung-Hwan, Daejeon 34122 (KR); JUNG, Hye-Mi, Daejeon 34122 (KR); SEONG, Jun-Yeob, Daejeon 34122 (KR)
(74) Representative: Plasseraud IP
(86) International application number: PCT/KR2023/012654
(87) International publication number: WO 2024/143753

(57) **Abstract**

A battery assembly according to an aspect of the present disclosure may include: a plurality of battery cells stacked on each other; and a thermal barrier disposed between two adjacent battery cells among the plurality of battery cells, wherein the thermal barrier may include: an elastic accommodation member having an accommodation space surrounded by an elastic film; and a thermal expansion material accommodated in the accommodation space and configured to expand at a first threshold temperature or above to increase the gap between the two battery cells.

## Description

### TECHNICAL FIELD

The present application claims priority to Korean Patent Application No. 10-2022-0187200 filed on December 28, 2022 and Korean Patent Application No. 10-2023-0043174 filed on March 31, 2023 in the Republic of Korea, the disclosures of which are incorporated herein by reference.

The present disclosure relates to a battery assembly, and a battery pack and a vehicle including the same, and more specifically, relates to a battery assembly having a plurality of battery cells capable of being charged and discharged, and a battery pack and a vehicle including the battery assembly.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. The output voltage of a battery cell, which is a basic secondary battery, is approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series, parallel, or a combination thereof and reconnecting the battery modules in series, parallel, a combination thereof, has been widely used.

Since the battery cells included in the battery module or battery pack described above are densely disposed in a narrow space, increasing the energy density, it is necessary to precisely control the direction of discharging high-temperature gas or flame generated from the respective battery cells.

However, as disclosed in Korean Patent Publication No. 10-2022-0052183, in the existing technology, multiple battery cells are densely disposed in a narrow space to increase the energy density of the battery module or battery pack, causing, when overheating or thermal runaway occurs in any one battery cell, chain thermal runaway or ignition of other battery cells.

### DISCLOSURE

### Technical Problem

The present disclosure has been designed to solve the problems of the related art, and therefore the present disclosure is directed to providing a battery assembly that prevents chain thermal runaway or ignition of battery cells included in a battery module or battery pack, and a battery pack and a vehicle including the same.

### Technical Solution

A battery assembly according to an aspect of the present disclosure may include: a plurality of battery cells stacked on each other; and a thermal barrier disposed between two adjacent battery cells among the plurality of battery cells, wherein the thermal barrier may include: an elastic accommodation member having an accommodation space surrounded by an elastic film; and a thermal expansion material accommodated in the accommodation space and configured to expand at a first threshold temperature or above to increase the gap between the two battery cells.

In an embodiment, the elastic accommodation member may be made of a material including one or more of silicone, polyurethane, PDMS (polydimethylsiloxane), and acrylonitrile copolymer.

In an embodiment, the elastic accommodation member may be configured to melt at a second threshold temperature, which is higher than the first threshold temperature, or above.

In an embodiment, the thermal expansion material may include a material in a gel state or a liquid state.

In an embodiment, the thermal expansion material may include silicone foam or polyurethane foam.

In an embodiment, the thermal barrier may further include an extinguishing material accommodated in the accommodation space of the elastic accommodation member.

In an embodiment, the extinguishing material may include at least one of an extinguishing agent in a liquid state, a gel state, or a powder state and an inert gas.

In an embodiment, the elastic accommodation member may be configured to expand in its volume by the thermal expansion material at the first threshold temperature or above and melt at a second threshold temperature, which is higher than the first threshold temperature, or above to discharge the extinguishing material accommodated in the accommodation space.

**In** an embodiment, wherein the elastic accommodation member may include: an inlet used to inject the thermal expansion material in a gel or liquid state into the accommodation space; and a sealing portion configured to seal the inlet.

**In** an embodiment, the battery assembly may further include a bus bar fixed to a predetermined position and electrically connected to the electrode leads of the two battery cells, and the electrode leads may extend from the two battery cells toward the bus bar, respectively, and may be coupled to the bus bar, and at least one electrode lead among the electrode leads may be configured to have a length extending toward the bus bar, which increases as the gap between the two battery cells increases.

**In** an embodiment, the at least one electrode lead may include a folding portion provided by folding at least a portion of the electrode lead, and the folding portion may be configured to gradually unfold as the gap between the two battery cells increases, thereby increasing the extension length of the corresponding electrode lead.

In an embodiment, the battery assembly may further include a clamping member configured to clamp the electrode leads and bring the same into close contact with each other, and the at least one electrode lead may have the folding portion in a portion excluding a portion that is in close contact with another electrode lead by the clamping member.

In an embodiment, the battery assembly may further include a case having an internal space in which the plurality of battery cells is accommodated, and a free space may be provided between a battery cell located at the outermost, among the plurality of battery cells accommodated in the internal space, and an inner surface of the case forming the internal space.

A battery pack according to another aspect of the present disclosure includes the battery assembly according to any one of the embodiments described above.

A vehicle according to another aspect of the present disclosure includes the battery assembly according to any one of the embodiments described above.

### Advantageous Effects

According to the present disclosure, a thermal barrier disposed between battery cells may expand at a first threshold temperature or above to increase the space between the battery cells, thereby blocking heat transfer between the battery cells, and as a result, it is possible to suppress or delay overheating or thermal runaway of the battery cells and prevent chain thermal runaway or ignition of the battery cells.

In addition, since the thermal barrier includes an elastic accommodation member that accommodates a thermal expansion material, it is possible to block heat transfer between the battery cells using the thermal expansion material in a gel or liquid state.

In addition, since the elastic accommodation member is configured such that its volume increases by the thermal expansion material at a first threshold temperature or above and such that it melts at a second threshold temperature, which is higher than the first threshold temperature, or above to discharge an extinguishing material, both a heat transfer blocking function and a fire-extinguishing function may be provided.

In addition, since the electrode lead of a battery cell adjacent to the thermal barrier may be configured to be capable of changing in its length, it is possible to prevent electrical disconnection of the battery cell even if the position of the battery cell changes as the thermal barrier thermally expands.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a diagram illustrating a battery assembly according to an embodiment of the present disclosure.
FIG. 2 is an exploded view illustrating the battery assembly shown in FIG. 1.
FIG. 3 is an enlarged view illustrating portion A1 in FIG. 1.
FIG. 4 is a cross-sectional view taken along line S1-S1' in FIG. 1.
FIG. 5 is a diagram illustrating the thermal expansion state of the thermal barrier shown in FIG. 4.
FIG. 6 is a diagram illustrating a battery assembly according to a modified embodiment of the present disclosure.
FIG. 7 is a diagram illustrating the thermal expansion state of the thermal barrier shown in FIG. 6.
FIG. 8 is a diagram illustrating a battery assembly according to another modified embodiment of the present disclosure.
FIG. 9 is a cross-sectional view taken along line S2-S2' in FIG. 8.
FIG. 10 is a diagram illustrating a battery pack according to an embodiment of the present disclosure.
FIG. 11 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

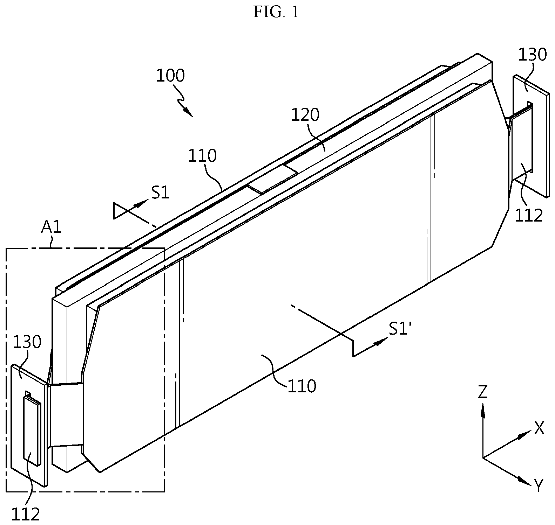

FIG. 1 is a diagram illustrating a battery assembly 100 according to an embodiment of the present disclosure.

As shown in FIG. 1, the battery assembly 100 according to an embodiment of the present disclosure includes a plurality of battery cells 110 and a thermal barrier 120.

The plurality of battery cells 110 is configured to be stacked on each other in one direction (the Y-axis direction in FIG. 1). The battery cell 110 included in the battery assembly 100 corresponds to the most fundamental secondary battery capable of being charged and discharged.

This battery cell 110 may be manufactured by storing an electrode assembly, including a positive electrode and a negative electrode stacked with a separator therebetween, and an electrolyte material in a case and sealing the case. For example, the battery cell 110 may be implemented as a pouch-type or prismatic-type battery cell that has electrode leads at one end or both ends thereof in the longitudinal direction (the X-axis direction in FIG. 1).

Although FIG. 1 shows that the battery assembly 100 includes two battery cells 110, the battery assembly 100 may also include three or more battery cells.

The thermal barrier 120 is disposed between two adjacent battery cells 110 among the battery cells described above, and is configured to expand at a first threshold temperature or above to increase the gap between the two battery cells. To this end, the thermal barrier 120 includes an elastic accommodation member and a thermal expansion material accommodated in the elastic accommodation member.

As will be explained again below, the thermal barrier 120 may be configured to melt at a second threshold temperature higher than the first threshold temperature and discharge a thermal expansion material or extinguishing material in a gel or liquid state, which is contained therein.

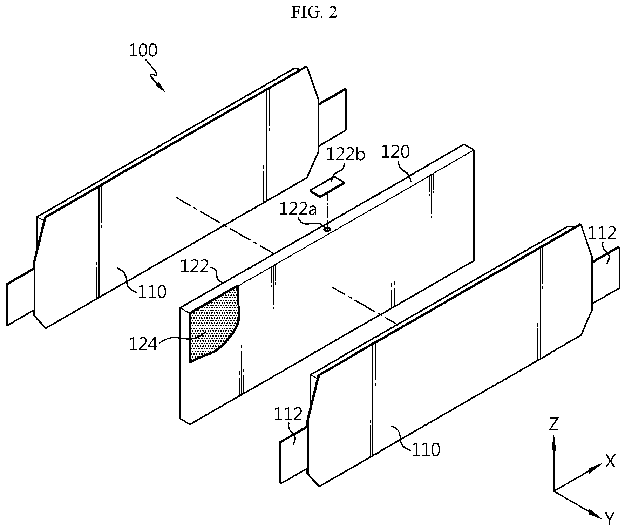

FIG. 2 is an exploded view illustrating the battery assembly 100 shown in FIG. 1.

As shown in FIG. 2, the battery cells of the battery assembly 100 may be stacked in one direction with a thermal barrier 120 therebetween. The thermal barrier 120 disposed between the battery cells may include an elastic accommodation member 122 and a thermal expansion material 124.

The elastic accommodation member 122 may have an accommodation space surrounded by an elastic film and may be configured to be disposed between the battery cells while being in surface contact with the respective battery cells. The elastic accommodation member 122 may be configured to have elasticity and a certain level of heat resistance.

To this end, at least the film of the elastic accommodation member 122 may be made of a material including at least one of silicone, polyurethane, polydimethylsiloxane (PDMS), and acrylonitrile copolymer.

The thermal expansion material 124 is a material configured to be accommodated in the accommodation space of the elastic accommodation member 122 and rapidly expand at a first threshold temperature, which corresponds to the temperature in the overheating or thermal runaway state of the battery cell, or above. This thermal expansion material 124 may be made of a material including any one of polyurethane foam (PU foam), silicone foam (Si foam), plastic, polymer, oligomer, derivatives thereof, or combinations thereof.

In addition, the thermal expansion material 124 may include a material in a gel state such as aerogel or in a liquid state. Depending on the embodiment, the thermal expansion material 124 may include a phase change material that changes state thereof by an endothermic reaction or an exothermic reaction depending on temperature.

In an embodiment, the thermal expansion material 124 may include polyurethane foam (PU foam), silicone foam (Si foam), or a material including both of them. In this case, the thermal expansion material 124 may be made of a porous material.

In an embodiment, the thermal barrier 120 may further include an extinguishing material accommodated in the accommodation space of the elastic accommodation member 122. In this case, the extinguishing material may include at least one of an extinguishing agent in a liquid or powder state and an inert gas.

For example, the extinguishing agent may be configured in a liquid state, a gel state, or a powder state, and may include one or more of sulfuric acid, potassium carbonate, sodium bicarbonate, aluminum sulfate, water, halon, and halogen compounds. For example, a powder extinguishing agent may decompose through an endothermic reaction to produce CO₂ gas, thereby performing endothermic and extinguishing functions. However, a powder extinguishing agent may leave solid residues. In order to prevent this, the extinguishing agent may include a halon-based liquid extinguishing agent.

The inert gas may include one or more of nitrogen, argon, and carbon dioxide.

Meanwhile, the elastic accommodation member 122 includes an inlet 122a used to inject the thermal expansion material or extinguishing material in a gel or liquid state into the accommodation space and a sealing portion 122b that seals the opening of the inlet 122a.

Meanwhile, the elastic accommodation member 122 may be configured to melt at a second threshold temperature, which is higher than the first threshold temperature at which the thermal expansion material rapidly expands, or above. In this case, the second threshold temperature may be a temperature at which the battery cell ignites or is more likely to ignite.

That is, the elastic accommodation member 122 may be configured to increase in its volume by the thermal expansion material at the first threshold temperature or above and melt at the second threshold temperature or above, thereby discharging the thermal expansion material and extinguishing material in a gel or liquid state, which are accommodated in the accommodation space.

As described above, the thermal barrier 120 may play the roles of a fire extinguishing device to extinguish fire occurring in the battery cell, as well as a barrier to suppress or block chain thermal runaway of other battery cells caused by high-temperature gas or flame discharged from the battery cell 110.

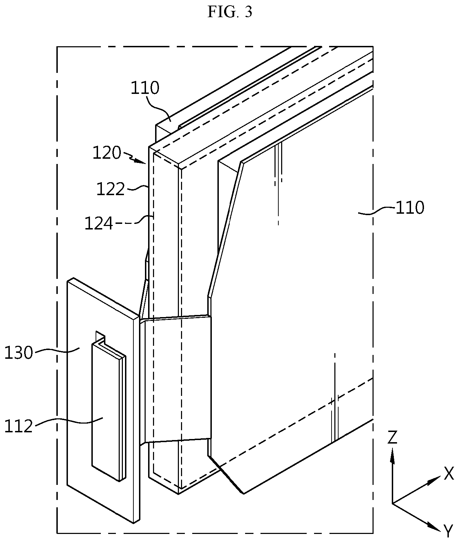

FIG. 3 is an enlarged view illustrating portion A1 in FIG. 1.

As shown in FIG. 3, the battery assembly 100 may further include a bus bar 130 fixed to a predetermined position. The bus bar 130 is a connection member that electrically connects the battery cells to each other or electrically connects the battery cell to an external electric circuit, and may be made of a conductive material.

The thermal barrier 120 may be configured to be disposed between two adjacent battery cells 110 while being in surface contact with the respective battery cells. The electrode lead 112 of the battery cell 110 adjacent to the thermal barrier 120 may extend from the battery cell 110 toward the bus bar 130 to be coupled to the bus bar 130.

The thermal barrier 120 may primarily expand by heat at a first threshold temperature or above, generated from any one of the battery cells, thereby increasing the gap between the battery cells.

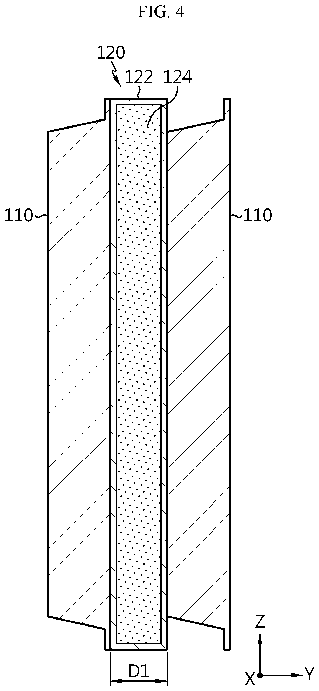

FIG. 4 is a cross-sectional view taken along line S1-S1' in FIG. 1.

As shown in FIG. 4, the thermal barrier 120 disposed between the plurality of battery cells 110 may have a predetermined thickness D1 if heat having the first threshold temperature or above is not generated from the adjacent battery cell 110.

On the other hand, if heat having first threshold temperature or above is generated from the adjacent battery cell 110, the thermal expansion material 124 accommodated in the elastic accommodation member 122 of the thermal barrier 120 may expand to increase the thickness of the thermal barrier 120.

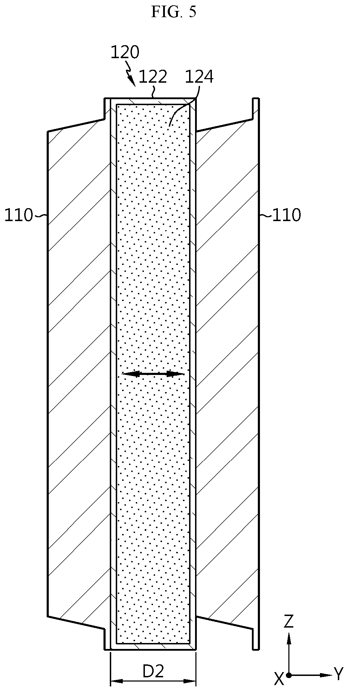

FIG. 5 is a diagram illustrating the thermal expansion state of the thermal barrier 120 shown in FIG. 4.

As shown in FIG. 5, if the temperature of any one of the two battery cells 110, which are stacked with the thermal barrier 120 interposed therebetween, rises to a first threshold temperature (e.g., 160 degrees C) or above, the thickness D2 of the thermal barrier 120 may increase, thereby expanding the gap between battery cells. As a result, heat transfer between the battery cells may be suppressed or delayed, and chain thermal runaway between the battery cells may be prevented.

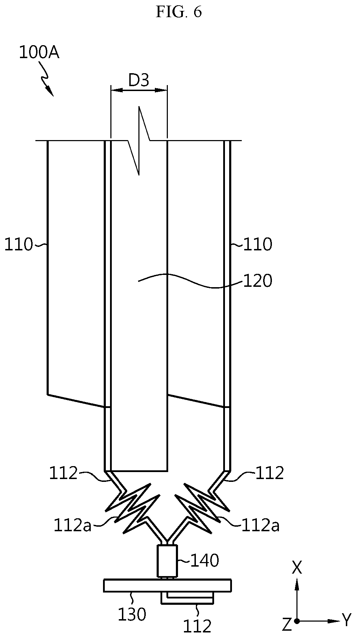

FIG. 6 is a diagram illustrating a battery assembly 100A according to a modified embodiment of the present disclosure.

As shown in FIG. 6, the battery assembly 100A according to a modified embodiment of the present disclosure, like the battery assembly 100 described above, may include a plurality of battery cells 110 and a thermal barrier 120. In addition, the battery assembly 100A may further include a bus bar 130 electrically connected to the plurality of battery cells 110. In this case, the bus bar 130 may be fixed to a predetermined position.

The electrode lead 112 of the battery cell 110 adjacent to the thermal barrier 120 may extend from the battery cell 110 toward the bus bar 130 so as to be coupled to the bus bar 130. In addition, the electrode lead 112 of at least one battery cell among the plurality of battery cells may be configured such that the extension length thereof to the bus bar 130 increases as the gap between the plurality of battery cells 110 increases.

To this end, the electrode lead 112 may have a folding portion 112a. The folding portion 112a may be configured such that at least a portion of the electrode lead 112 is folded in multiple layers. This folding portion 112a may be configured to gradually unfold as the gap between the thermal barrier 120 and adjacent battery cells increases, thereby increasing the extension length of the corresponding electrode lead 112.

In an embodiment, the battery assembly 100A may further include a clamping member 140 configured to clamp the electrode leads coupled to the bus bar 130 to bring them into close contact with each other. This clamping member 140 may include tape or clips.

In this case, the electrode lead 112 may have the folding portion 112a in a portion, excluding the portion that is in close contact with other electrode leads by the clamping member 140.

For example, the thermal barrier 120 disposed between the plurality of battery cells 110 may maintain a predetermined thickness D3 thereof if heat of the first threshold temperature or above is not generated from the adjacent battery cell 110.

On the other hand, if heat of the first threshold temperature or above is generated from the adjacent battery cell 110, the thermal expansion material 124 accommodated in the elastic accommodation member 122 of the thermal barrier 120 may expand to increase the thickness of the thermal barrier 120.

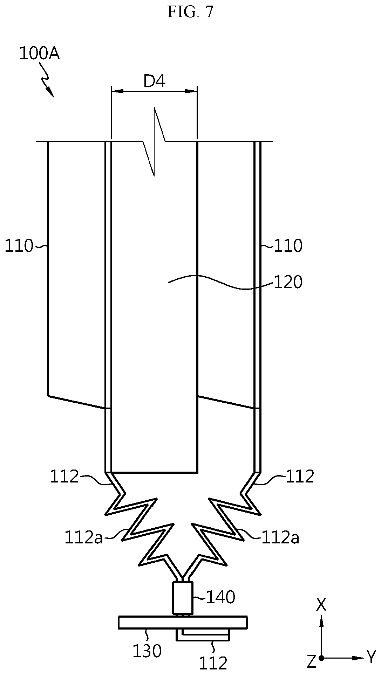

FIG. 7 is a diagram illustrating the thermal expansion state of the thermal barrier 120 shown in FIG. 6.

As shown in FIG. 7, the electrode lead 112 of each battery cell 110 adjacent to the thermal barrier 120 may include a folding portion 112a. As the thermal barrier 120 expands at the first threshold temperature or above so that the thickness D4 of the thermal barrier 120 increases, the battery cells 110 gradually move away from the bus bar 130, and the folding portion 112a of the electrode lead 112 gradually unfolds, thereby increasing the length of the electrode lead 112. As a result, unintentional disconnection of the battery cells or damage to the electrode leads may be prevented.

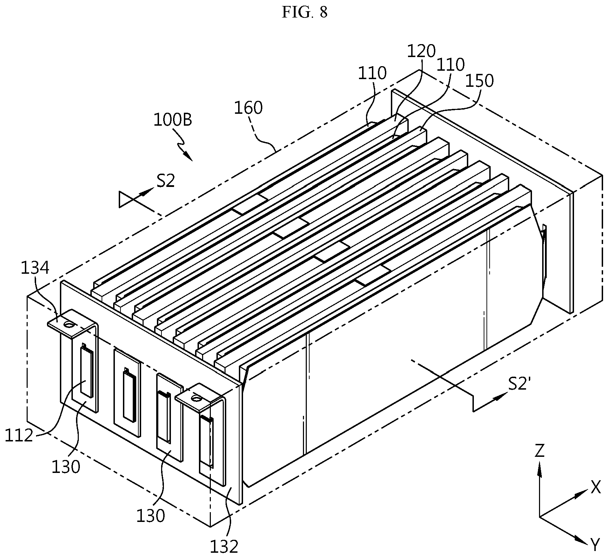

FIG. 8 is a diagram illustrating a battery assembly 100B according to another modified embodiment of the present disclosure.

As shown in FIG. 8, the battery assembly 100B according to another modified embodiment of the present disclosure may include a plurality of battery cells 110 and a plurality of thermal barriers 120.

For example, the battery assembly 100B may include a plurality of battery units that include at least two battery cells among a plurality of battery cells and at least one thermal barrier among a plurality of thermal barriers.

**In** this case, an elastic pad 150 made of an elastic material may be disposed between the battery units. This elastic pad 150 may be made of a material including rubber, silicone, or polymer synthetic resin, which has elasticity and electrical insulation.

**In** addition, the battery assembly 100B may further includes a bus bar 130 to which the electrode lead 112 of the battery cell 110 is electrically connected and a bus bar frame 132 supporting the bus bar 130.

**In** addition, the battery assembly 100B may further include a case 160 having an internal space in which a plurality of battery cells is accommodated.

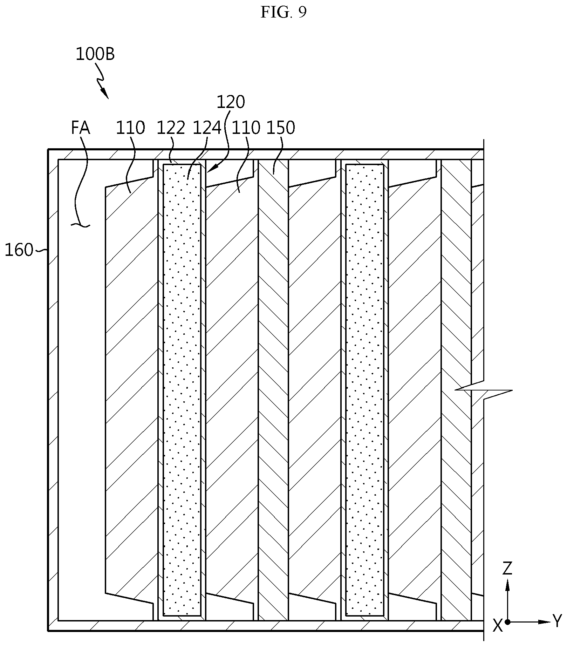

FIG. 9 is a cross-sectional view taken along line S2-S2' in FIG. 8.

As shown in FIG. 9, a plurality of battery cells 110 stacked on each other may be accommodated in the internal space of the case 160, and a thermal barrier 120 and an elastic pad 150 may be disposed between the plurality of battery cells 110.

**In** addition, a free space FA may be provided between the outermost battery cell among the plurality of battery cells accommodated in the internal space of the case 160 and the inner surface of the case 160 forming the internal space. As described above, since the case 160 is configured to have the free space FA, movement of the battery cells according to the expansion of the thermal barrier 120 may be facilitated.

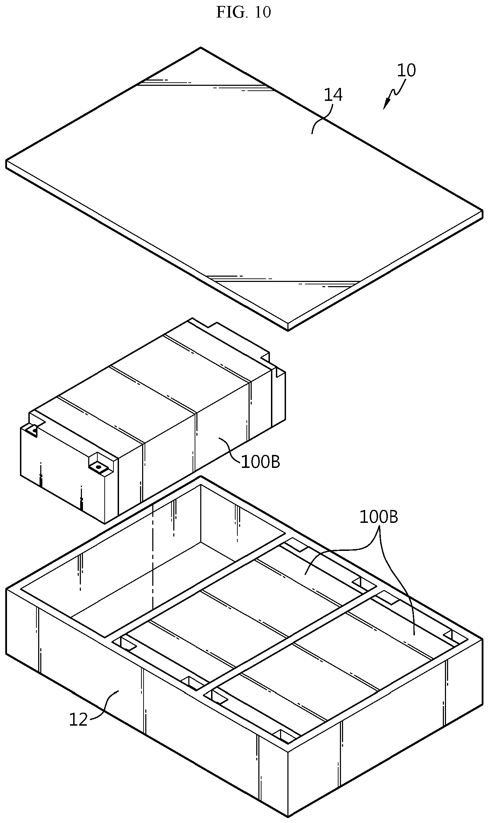

FIG. 10 is a diagram illustrating a battery pack 10 according to an embodiment of the present disclosure.

As shown in FIG. 10, a battery pack 10 according to an embodiment of the present disclosure may include the battery assembly 100, 100A, or 100B according to any one of the various embodiments described above, and a pack case 12 and 14 configured to accommodate one or more of the battery assemblies 100, 100A, and 100B.

For example, the battery pack 10 may be configured such that the battery assembly 100B, which is modularized by accommodating a plurality of battery cells 110 and a plurality of thermal barriers 120 in a case 160, like the battery assembly shown in FIG. 8, is accommodated in the pack case 12 and 14.

The pack case 12 and 14 may include a pack tray 12 that has an opening provided at the top and an accommodation space leading to the opening and accommodates a plurality of battery assemblies inside the accommodation space, and a pack lid 14 that covers the opening of the pack tray 12.

The pack tray 12 may include cross beams that divide the accommodation space. In addition, a gas channel for discharging venting gas generated from each battery assembly may be provided on the wall of the pack tray 12 forming the accommodation space.

The battery pack 10 according to an embodiment of the present disclosure may also be configured in a cell-to-pack manner. In this case, the battery pack 10 may be configured to directly accommodate a battery assembly that does not include a case in the pack case 12 and 14, like the battery assembly 100 or 100A shown in FIG. 1 or 6.

In addition, the battery pack 10 may further include a variety of electrical equipment (not shown) that controls the charging and discharging operation of the battery assembly accommodated in the pack case 12 and 14 and monitors SOC (state-of-charge), SOH (state-of-health), and the like. The electrical equipment may be accommodated in the pack case 12 and 14 together with the battery assembly described above.

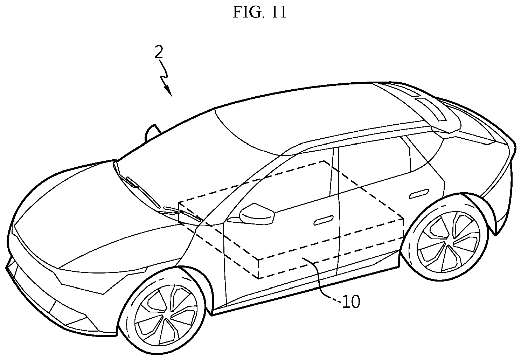

FIG. 11 is a diagram illustrating a vehicle 2 according to an embodiment of the present disclosure.

As shown in FIG. 11, the vehicle 2 according to an embodiment of the present disclosure may include the battery assembly 100, 100A, or 100B according to any one of the various embodiments described above. For example, the vehicle 2 may include a battery pack 10 having one or more battery assemblies 100, 100A, and 100B provided therein. In this case, the battery assembly 100, 100A, or 100B or the battery pack 10 including the same may provide electrical energy required for various operations of the vehicle 2.

For reference, the battery assembly 100, 100A, or 100B according to the present disclosure may be applied to various electric devices or electric systems in addition to vehicles, and may also be applied to ESSs (Energy Storage Systems).

As described above, according to the present disclosure, a thermal barrier disposed between battery cells may expand at a first threshold temperature or above to increase the space between the battery cells, thereby blocking heat transfer between the battery cells, and as a result, it is possible to suppress or delay overheating or thermal runaway of the battery cells and prevent chain thermal runaway or ignition of the battery cells.

In addition, since the thermal barrier includes an elastic accommodation member that accommodates a thermal expansion material, it is possible to block heat transfer between the battery cells using the thermal expansion material in a gel or liquid state.

In addition, since the elastic accommodation member is configured such that its volume increases by the thermal expansion material at a first threshold temperature or above and such that it melts at a second threshold temperature, which is higher than the first threshold temperature, or above to discharge an extinguishing material, both a heat transfer blocking function and a fire-extinguishing function may be provided.

In addition, since the electrode lead of a battery cell adjacent to the thermal barrier may be configured to be capable of changing in its length, it is possible to prevent electrical disconnection of the battery cell even if the position of the battery cell changes as the thermal barrier thermally expands.

Furthermore, it goes without saying that the embodiments according to the present disclosure are able to solve various technical problems other than those mentioned in this specification in the relevant technical field as well as related technical fields.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

## Claims

1. A battery assembly comprising:
a plurality of battery cells stacked on each other; and
a thermal barrier disposed between two adjacent battery cells among the plurality of battery cells,
wherein the thermal barrier comprises:
an elastic accommodation member having an accommodation space surrounded by an elastic film; and
a thermal expansion material accommodated in the accommodation space and configured to expand at a first threshold temperature or above to increase the gap between the two adjacent battery cells.

2. The battery assembly according to claim 1,
wherein the elastic accommodation member is made of a material comprising one or more of silicone, polyurethane, polydimethylsiloxane, i.e., PDMS, and acrylonitrile copolymer.

3. The battery assembly according to claim 1,
wherein the elastic accommodation member is configured to melt at a second threshold temperature, which is higher than the first threshold temperature, or above.

4. The battery assembly according to claim 1,
wherein the thermal expansion material comprises a material in a gel state or a liquid state.

5. The battery assembly according to claim 1,
wherein the thermal expansion material comprises silicone foam or polyurethane foam.

6. The battery assembly according to claim 1,
wherein the thermal barrier further comprises an extinguishing material accommodated in the accommodation space of the elastic accommodation member.

7. The battery assembly according to claim 6,
wherein the extinguishing material comprises at least one of an extinguishing agent in a liquid state, a gel state, or a powder state and an inert gas.

8. The battery assembly according to claim 6,
wherein the elastic accommodation member is configured to expand in its volume by the thermal expansion material at the first threshold temperature or above and melt at a second threshold temperature, which is higher than the first threshold temperature, or above to discharge the extinguishing material accommodated in the accommodation space.

9. The battery assembly according to claim 1,
wherein the elastic accommodation member comprises:
an inlet used to inject the thermal expansion material in a gel or liquid state into the accommodation space; and
a sealing portion configured to seal the inlet.

10. The battery assembly according to claim 1,
further comprising a bus bar fixed to a predetermined position and electrically connected to the electrode leads of the two adjacent battery cells,
wherein the electrode leads extend from the two adjacent battery cells toward the bus bar, respectively, and are coupled to the bus bar, and
wherein at least one electrode lead among the electrode leads is configured to have a length extending toward the bus bar, which increases as the gap between the two adjacent battery cells increases.

11. The battery assembly according to claim 10,
wherein the at least one electrode lead comprises a folding portion provided by folding at least a portion of the electrode lead, and
wherein the folding portion is configured to gradually unfold as the gap between the two adjacent battery cells increases, thereby increasing the extension length of the corresponding electrode lead.

12. The battery assembly according to claim 11,
further comprising a clamping member configured to clamp the electrode leads and bring the same into close contact with each other,
wherein the at least one electrode lead has the folding portion in a portion excluding a portion that is in close contact with another electrode lead by the clamping member.

13. The battery assembly according to claim 1,
further comprising a case having an internal space in which the plurality of battery cells is accommodated,
wherein a free space is provided between a battery cell located at the outermost, among the plurality of battery cells accommodated in the internal space, and an inner surface of the case forming the internal space.

14. A battery pack comprising the battery assembly according to any one of claims 1 to 13.

15. A vehicle comprising the battery assembly according to any one of claims 1 to 13.
